# EUROPEAN PATENT SPECIFICATION

(11) **EP 1 787 487 B1**
(45) Date of publication and mention of the grant of the patent: **07.09.2011**
(21) Application number: 05784560.4
(22) Date of filing: 07.09.2005
(51) Int. Cl.: H04W 48/18

(54) **METHOD OF TESTING THE AVAILABILITY OF A CONNECTION TO THE HOME AUTHENTICATION SERVER PRIOR TO ASSOCIATING WITH A WLAN ACCESS POINT**
VERFAHREN ZUR PRÜFUNG DER VERFÜGBARKEIT EINER VERBINDUNG ZU EINEM HEIM-AUTHENTIFIZIERUNGSSERVER VOR DER ASSOZIIERUNG MIT EINEM WLAN-ZUGANGSPUNKT
PROCEDE DE TEST DE LA DISPONIBILITE D'UNE CONNEXION AVEC LE SERVEUR D'AUTHENTIFICATION DE REFERENCE PREALABLEMENT A L'ASSOCIATION AVEC UN POINT D'ACCES DE RESEAU LOCAL RADIO

(30) Priority: 09.09.2004 GB 0419927; 02.11.2004 GB 0424189
(43) Date of publication of application: 23.05.2007
(73) Proprietor: SIEMENS AKTIENGESELLSCHAFT, 80333 München (DE)
(72) Inventor: HANCOCK, Robert, Southampton Hampshire SO18 1NW (GB); HEPWORTH, Eleanor, Hampshire SO51 5RE (GB); MCCANN, Stephen, Southampton Hampshire SO16 8LT (GB)
(74) Representative: Payne, Janice Julia
(86) International application number: PCT/GB2005/003426
(87) International publication number: WO 2006/027564

(56) References cited:
- WO-A-2004/064306
- US-A1- 2001 023 446
- SIEMENS AG, PUBLIC COMMUNICATION NETWORK GROUP: "Information - Call Handling -Roaming" SIEMENS, 1996, pages 1-20, XP002358194
- 3GPP: "3rd Generation Partnership Project; Technical Spacification Group Services and System Aspects; 3GPP system to Wireless Local Area Network (WLAN) interworking; System description (Release 6)" 3GPP TS 23.234 V6.1.0, June 2004 (2004-06), pages 1-94, XP002358195
- 3GPP: "3rd Generation Partnership Project; Technical Spacification Group Core Network; 3GPP system to WLAN interworking; UE to network protocols; Stage 3 (Release 6)" 3GPP TS 24.234 V1.6.0, August 2004 (2004-08), pages 1-24, XP002358196

## Description

This invention relates to a method of determining availability of a wireless network connection between a local network and a home network of a mobile user device prior to initiating connection or authentication.

There are a rising number of public wireless local area network (PWLAN) hotspots and a variety of service providers now offering PWLAN services. Many of these operators offer access to users of differing roaming partners.

When a user initially enters an area of coverage of one or more hotspots, it is useful for the user device to be able to determine dynamically the capabilities of a physical network before deciding what to do with that network, e.g. to determine whether authentication will be possible within that hotspot without having to initiate a lengthy authentication exchange that may fail for a variety of reasons, or to carry out other functions, such as association and service selection. Instead, it is better to have some initial information discovered by the user device or terminal to allow it to decide whether a suitable roaming agreement is in place to allow the user to authenticate with the network. This also supports selection of subscription credentials for users that may have relationships with multiple operators.

Therefore, once the initial determination has been made the user can select the hotspot and user credentials with the knowledge that authentication has a good chance of success, since the appropriate roaming agreements are in place.

Existing solutions extend current network to user device protocol exchanges to include a listing of roamed operator information. For example, solutions that include a list of roamed operators within the extensible authentication protocol (EAP) Request/Identity message are being developed within the internet engineering task force (IETF). However, there are restrictions on the amount of information that can be included in this way. For future networks where the list of roaming agreements might be quite extensive, these approaches do not offer a long term solution.

3GPP TS 23.234 and 3GPP TS 24.234 describe 3GPP system to WLAN interworking and disclose that in automatic mode a user equipment (UE) first has to scan for available WLANs and then has to start association with the detected first priority WLAN in order to check whether authentication with the HPLMN succeeds.

WO2004/064306 describes a wireless LAN system in which a request to authenticate a mobile station results in network identification and service information about the service provider being returned.

In accordance with the present invention, a method of determining availability of a connection between a public wireless local area network and a home network of a mobile user device prior to initiating connection or authentication comprises selecting a plurality of network devices of a plurality of public wireless local area networks; and sending a signalling message from the user device to the network devices including an identifier for the user device ; wherein the signalling message is sent to the plurality of network devices in parallel; wherein the identifier comprises home identifier data of the user device; wherein each of the plurality of network devices formulates a protocol signalling message, using the home identifier data, that each network device sends towards the home network to test availability of a relationship between the network device and the user device's home network; and wherein an indication is returned to the user device of the result of the attempt.

The present invention allows the user device to determine whether or not any sort of connection or authentication with the network is possible; and even if possible, whether it is worthwhile for the mobile user device, before it actually initiates a connection or authentication dialogue. Having determined what is possible, the mobile user device can make an informed choice without wasting time and resources attempting functions that are not actually possible with a specific network. Selecting a plurality of network devices in parallel allows for some attempts being unsuccessful, without increasing the overall time taken to determine which network device would allow that mobile device to make a connection.

Typically, the home identifier data comprises a home realm of the user device, with which the user expects to authenticate; a home network; or a home user subscription. The identifier may precisely identify the user subscription or provide just include enough information to identify the home network.

Preferably, service information can be provided with the return indication, if the result is success. This information could be, for example, cost per minute for a connection, to aid the user in deciding whether to take up that connection.

Preferably, the network device is a wireless gateway, such as a base station or access point. The access point is dependent upon the technology concerned, for IEEE 802.11 technology, for example, the access point is a public wireless local area network (PWLAN) hotspot. The invention is applicable to many technologies, such as UWB,

IEEE 802.16, IEEE 802.20 and suitable access points are chosen according to the technology.

The message can be any type of protocol signalling message which can obtain the required data, but preferably the message is an authentication, authorisation and accounting protocol signalling message.

The identifier may be an identifier for a user subscription, but preferably, the identifier comprises a network access identifier.

Typical user devices are any personal terminal including laptops, mobile phones, personal digital assistants, or multimedia entertainment terminals, or gateway units such as those found in aircraft, trains or ships.

An example of a method of determining availability of a network connection for a mobile user device in accordance with the present invention will now be described with reference to the accompanying drawing in which:

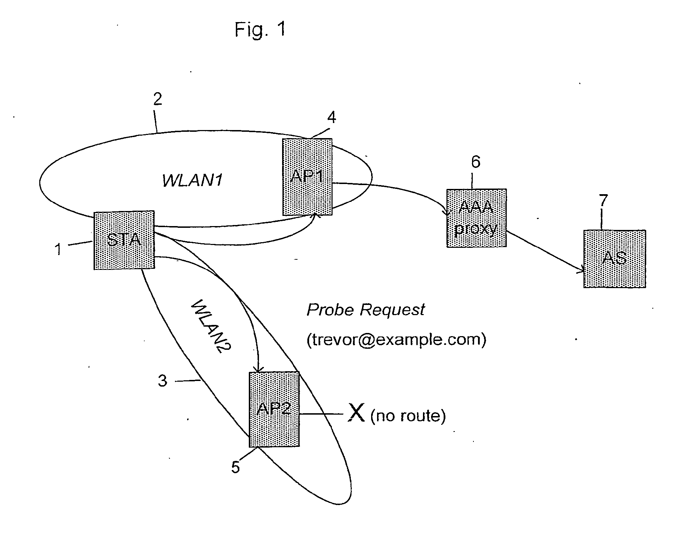

Figure 1 is a block diagram illustrating the method of the present invention.

Figure 1 shows a mobile station (STA), or user device 1 which has detected the presence of two suitable base stations or access points AP1 and AP2 4, 5 via which it might like to communicate with the local network. The user may already be associated with another access point (AP), or may have detected several APs in the vicinity belonging to two different network operators (e.g. within an airport business lounge). The example embodiment of Figure 1, assumes an IEEE 802.11 wireless local area network (WLAN) device and AP, but the invention is not limited to WLAN. In order to assist the user device 1 in deciding which AP to associate with, the user device needs to try and discover whether it can authenticate via both networks. To do this the user device 1 sends a Probe Request layer 2 signalling message via respective WLAN1 and WLAN2 2, 3 to each access point 4, 5, including a network access identifier (NAI) in the message. The user device 1 includes information about the home realm with which the user expects to authenticate, in this case by including the NAI, e.g. trevor@example.com, in this message.

The AP uses the realm information to formulate a protocol signalling message, such as an authentication, authorisation and accounting (AAA) protocol signalling message that it sends towards the appropriate home network, using the AAA routing infrastructure already in place. In this example, the APs 4, 5 attempt to dynamically establish a path to an authorisation server 7 using the realm information, example.com, from the NAI to try and contact the appropriate home authentication server through the network and, if successful, returns this result to the user device 1. The route via WLAN2 3 proves to be a dead end, but the route via AP1 4 uses an AAA routing infrastructure 6 that is already in place, i.e. the proxies and relays along the route have realm based routing tables configured in them for routing AAA requests. These are used to work out whether a suitable path exists to the home authentication server. The same path may be ultimately used for authentication, if the user decides to proceed.

If the attempt to contact the home server is unsuccessful, an error message is returned to the user device 1 and if the attempt is successful, a message is returned to the user device 1, indicating that this is a suitable network with which to initiate a connection or authentication.

The present invention allows a device wishing to connect to, or authenticate with, the local network to dynamically discover whether suitable roaming agreements are in place between the local networks and their home network at the link layer, i.e. before any state related to the user device has been installed in the network beyond the APs 4, 5, both at layer 2 and layer 3. A multimode terminal may be capable of communicating with a number of disparate wireless technologies, destination networks and mobile operators. This invention allows such a terminal to gather information about all possible combinations of communication channels, before the user attempts to associate, authenticate and select services. In future it is likely that terminals capable of simultaneous communication over multiple radio bearers to different physical networks will continuously, or at least at regular intervals, seek out fundamental network capabilities, which if available, the user device may then choose to take up.

In the solution of the present invention the user device wishing to discover information about the network can do so without having to have any relationship in place (e.g. pre-association) with the base station, other than being within physical communication range. This allows investigations to be initiated across multiple base stations simultaneously with a low management overhead.

The user device is able to discover suitable networks to authenticate with, associate or select services, prior to associating with all possible networks. This reduces not only the amount of signalling and use of connection setup, but also provides a fast efficient network discovery mechanism. Failure to detect a route through to the home network indicates to the user device that an association with that local network AP is pointless, even if it appears to be the best AP from a wireless environment point of view. Also, failure can be put down to a lack of route through to the home network much quicker, as opposed to trying to carry out a more sophisticated EAP exchange and the exchange failing for some mildly ambiguous reason. This can be deduced from how far through the authentication procedure one successfully reaches, i.e. where into the EAP method one stops.

The probe up and back through the AAA infrastructure 6 can be used to gather information, as the message travels in both directions, about the service available to the user, especially including simple cost or authorisation aspects. This sort of information would be very hard to advertise generically since it depends on the roaming chain. Referring back to Figure 1, it can be seen that although AP1 4 returns a successful roaming route, if the cost of using this route is high (e.g. $10/minute), the user device 1 still may decide not to connect through this routing.

Other benefits are that the user does not have to reveal their full identity, just an identifier for their user subscription, to test if there is a connection to their home server, so there are few privacy concerns. The amount of information to be advertised in beacons is reduced. The mechanism can be operated pre-association, so the probe/response can be carried out even while the user is associated with a different AP, whereas other solutions require the user to associate first, therefore causing a service interruption.

The system is backwards compatible, making use of appropriate formats of the probe request and response and it will work with unmodified APs, i.e. an unmodified AP returns a meaningful 'don't know' response except in the very rare case of an NAI collision with an existing beacon message, service set identifier (SSID).

Even if roaming is not supported, other information can be returned as an alternative, such as "I don't roam with that operator, but I do allow on-line signup.", or a textual comment can be returned. The invention does not require an EAP extension and has no direct interaction with other protocol state machines over the air, since it just gives a hint about whether to authenticate or not, so it does not compromise existing security mechanisms or mean that they have to be re-implemented. The invention can be implemented in a simple self-contained way inside the terminal lower layers. It can also probe for a number of NAIs in parallel by just sending multiple probes.

## Claims

1. A method of determining availability of a connection between a public wireless local area network (2,3) and a home network of a mobile user device (1) prior to initiating connection or authentication, the method comprising selecting a plurality of network devices (4,5) of a plurality of public wireless local area networks (2,3); and sending a signalling message from the user device (1) to the network devices (4,5) including an identifier for the user device (1); wherein the signalling message is sent to the plurality of network devices (4,5) in parallel; wherein the identifier comprises home identifier data of the user device (1); wherein each of the plurality of network devices (4,5) formulates a protocol signalling message, using the home identifier data, that each network device (4,5) sends towards the home network to test availability of a relationship between the network device (4,5) and the user device's home network; and wherein an indication is returned to the user device (1) of the result of the attempt.

2. A method according to claim 1, wherein the home identifier data comprises a home realm of the user device, with which the user expects to authenticate; a home network; or a home user subscription.

3. A method according to claim 1 or claim 2, wherein service information is provided with the return indication if the result is success.

4. A method according to any preceding claim, wherein the network device (4,5) is a base station or access point.

5. A method according to claim 4, wherein the access point (4,5) is a public wireless local area network hotspot.

6. A method according to any preceding claim, wherein the protocol signalling message is an authentication, authorisation and accounting protocol signalling message.

7. A method according to any preceding claim, wherein the identifier comprises a network access identifier.

8. A method according to any preceding claim, wherein the user device (1) comprises one of a laptop, mobile phone, personal digital assistant or multimedia entertainment terminal.

## Patentansprüche

1. Verfahren zum Ermitteln der Verfügbarkeit einer Verbindung zwischen einem öffentlichen drahtlosen lokalen Netzwerk (2, 3) (WLAN - Wireless Local Area Network) und einem Heimatnetz eines mobilen Benutzergerätes (1) vor dem Aufbauen der Verbindung oder der Authentifizierung, wobei das Verfahren Folgendes umfasst: Auswählen mehrerer Netzwerkeinrichtungen (4, 5) mehrerer öffentlicher drahtloser lokaler Netzwerke (2, 3) und Senden einer Signalisierungsnachricht von dem Benutzergerät (1) an die Netzwerkeinrichtungen (4, 5), die eine Kennung für das Benutzergerät (1) enthält, wobei die Signalisierungsnachricht gleichzeitig an die mehreren Netzwerkeinrichtungen (4, 5) gesendet wird, wobei die Kennung Heimatkenndaten für das Benutzergerät (1) umfasst, wobei jede der mehreren Netzwerkeinrichtungen (4, 5) mit Hilfe der Heimatkenndaten eine Protokollsignalisierungsnachricht formuliert, die jede Netzwerkeinrichtung (4, 5) zu dem Heimatnetz sendet, um die Verfügbarkeit einer Beziehung zwischen der Netzwerkeinrichtung (4, 5) und dem Heimatnetz des Benutzergerätes zu beurteilen, und wobei eine Meldung zum Resultat des Versuchs an das Benutzergerät (1) zurückgeschickt wird.

2. Verfahren nach Anspruch 1, bei dem die Heimatkenndaten einen Heimatbereich des Benutzergerätes, mit dem sich der Benutzer zu authentifizieren beabsichtigt, ein Heimatnetz oder ein Heimat-Benutzerabonnement umfassen.

3. Verfahren nach Anspruch 1 oder 2, bei dem mit der Rückmeldung Dienstinformationen mitgeschickt werden, wenn das Resultat Erfolg entspricht.

4. Verfahren nach einem der vorhergehenden Ansprüche, bei dem es sich bei der Netzwerkeinrichtung (4, 5) um eine Basisstation oder einen Zugangspunkt handelt.

5. Verfahren nach Anspruch 4, bei dem es sich bei dem Zugangspunkt (4, 5) um einen öffentlichen WLAN-Hotspot handelt.

6. Verfahren nach einem der vorhergehenden Ansprüche, bei dem es sich bei der Protokollsignalisierungsnachricht um eine Authentifizierungs-, Autorisierungs- und Abrechnungsprotokollsignalisierungsnachricht handelt.

7. Verfahren nach einem der vorhergehenden Ansprüche, bei dem die Kennung eine Netzwerkzugangskennung umfasst.

8. Verfahren nach einem der vorhergehenden Ansprüche, bei dem das Benutzergerät (1) einen Laptop, ein Mobiltelefon, einen PDA (persönlichen digitalen Assistenten) oder ein Multimediaunterhaltungsendgerät umfasst.

## Revendications

1. Procédé de détermination de la disponibilité d'une connexion entre un réseau local sans fil public (2, 3) et un réseau domestique d'un dispositif d'usager mobile (1) avant de lancer la connexion ou l'authentification, le procédé consistant à sélectionner une pluralité de dispositifs de réseau (4, 5) d'une pluralité de réseaux locaux sans fil publics (2, 3) et à envoyer un message de signalisation du dispositif d'usager (1) aux dispositifs de réseau (4, 5) comprenant un identifiant pour le dispositif d'usager (1), étant entendu que le message de signalisation est envoyé à la pluralité de dispositifs de réseau (4, 5) en parallèle, étant entendu que l'identifiant comprend des données d'identifiant domestique du dispositif d'usager (1), étant entendu que chaque dispositif de réseau de la pluralité de dispositifs de réseau (4, 5) formule un message de signalisation de protocole, en utilisant les données d'identifiant domestique, que chaque dispositif de réseau (4, 5) envoie au réseau domestique pour tester la disponibilité d'une relation entre le dispositif de réseau (4, 5) et le réseau domestique du dispositif d'usager, et étant entendu qu'une indication est renvoyée au dispositif d'usager (1) sur le résultat de la tentative.

2. Procédé selon la revendication 1, dans lequel les données d'identifiant domestique comprennent un domaine domestique du dispositif d'usager avec lequel l'usager prévoit de s'authentifier, un réseau domestique ou un abonnement d'usager domestique.

3. Procédé selon la revendication 1 ou la revendication 2, dans lequel des informations de service sont fournies avec l'indication renvoyée si le résultat est une réussite.

4. Procédé selon l'une quelconque des revendications précédentes, dans lequel le dispositif de réseau (4, 5) est une station de base ou un point d'accès.

5. Procédé selon la revendication 4, dans lequel le point d'accès (4, 5) est un lieu d'accès à un réseau local sans fil public.

6. Procédé selon l'une quelconque des revendications précédentes, dans lequel le message de signalisation de protocole est un message de signalisation de protocole d'authentification, d'autorisation et de comptabilisation.

7. Procédé selon l'une quelconque des revendications précédentes, dans lequel l'identifiant est constitué par un identifiant d'accès au réseau.

8. Procédé selon l'une quelconque des revendications précédentes, dans lequel le dispositif d'usager (1) est constitué par un ordinateur portable, un téléphone mobile, un assistant personnel numérique ou un terminal multimédia de divertissement.
